(19) Europäisches Patentamt
European Patent Office
Office européen des brevets

(11) **EP 1 164 683 B1**

(12) **EUROPEAN PATENT SPECIFICATION**

(45) Date of publication and mention
of the grant of the patent:
**05.10.2016 Bulletin 2016/40**

(51) Int Cl.:
*H02K 1/27* *(2006.01)*    *H02K 15/03* *(2006.01)*

(21) Application number: **01114575.2**

(22) Date of filing: **18.06.2001**

(54) **Permanent magnet rotor and method of making the same**

Dauermagnetrotor und zugehöriges Herstellungsverfahren

Rotor à aimant permanent et son procédé de fabrication

(84) Designated Contracting States:
**DE FR IT SE**

(30) Priority: **16.06.2000 JP 2000181239**

(43) Date of publication of application:
**19.12.2001 Bulletin 2001/51**

(73) Proprietor: **Yamaha Hatsudoki Kabushiki Kaisha
Iwata-shi, Shizuoka-ken (JP)**

(72) Inventors:
 • **Naito, Shinya
   Iwata-Shi,
   Shizuoka-ken (JP)**
 • **Hino, Haruyoshi
   Iwata-Shi,
   Shizuoka-ken (JP)**

(74) Representative: **Grünecker Patent- und
Rechtsanwälte
PartG mbB
Leopoldstraße 4
80802 München (DE)**

(56) References cited:
**WO-A1-98/40952      DE-A1- 4 240 995
FR-A1- 2 785 105**

 • **PATENT ABSTRACTS OF JAPAN vol. 1999, no.
   14, 22 December 1999 (1999-12-22) -& JP 11
   262205 A (FUJITSU GENERAL LTD), 24
   September 1999 (1999-09-24)**
 • **PATENT ABSTRACTS OF JAPAN vol. 008, no. 161
   (E-257), 26 July 1984 (1984-07-26) -& JP 59 059057
   A (FANUC KK), 4 April 1984 (1984-04-04)**
 • **PATENT ABSTRACTS OF JAPAN vol. 1999, no.
   04, 30 April 1999 (1999-04-30) -& JP 11 027908 A
   (MATSUSHITA ELECTRIC IND CO LTD), 29
   January 1999 (1999-01-29)**
 • **PATENT ABSTRACTS OF JAPAN vol. 012, no. 060
   (E-584), 23 February 1988 (1988-02-23) -& JP 62
   203536 A (YASKAWA ELECTRIC MFG CO LTD),
   8 September 1987 (1987-09-08)**
 • **PATENT ABSTRACTS OF JAPAN vol. 012, no. 389
   (E-669), 17 October 1988 (1988-10-17) & JP 63
   129834 A (MATSUSHITA ELECTRIC IND CO LTD),
   2 June 1988 (1988-06-02)**
 • **PATENT ABSTRACTS OF JAPAN vol. 1998, no.
   03, 27 February 1998 (1998-02-27) & JP 09 294356
   A (HONDA MOTOR CO LTD), 11 November 1997
   (1997-11-11)**

## Description

The present invention relates to a method of making a permanent magnet rotor and a permanent magnet rotor made by said method.

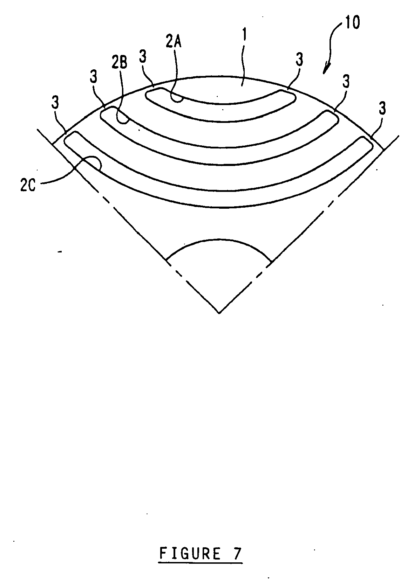

A conventional embedded magnet type permanent magnet rotor has been disclosed, for example, in Laid Open Japanese Patent Application Hei 11-262205 or Hei 11-206075, in which the permanent magnet rotor, as shown in Fig. 7 with respect to the shape of one pole in end view, has a rotor core 1 formed with a plurality of slits 2A, 2B, 2C in multiple layers. Each of the slits 2A-2C has an end face in the shape of an arc configured such that its longitudinal ends are located in the vicinity of the outside circumferential surface of the rotor core 1 and its longitudinal middle portion is located radially inwardly of the end portions, and extends to the opposite end of the rotor core 1 in the axial direction (perpendicular to the plane of Fig. 7) with the same cross sectional shape as the shape of the end face.

In order to form a permanent magnet rotor 10 with a rotor core 1 having permanent magnets embedded, bond magnet (plastic magnet) may be filled in the slits 2A-2C (or filled in a magnetic field) and solidified (that is, formed by injection molding), or permanent magnets machined respectively in the shapes of the slits 2A-2C, may be fitted in the slits 2A-2C.

In addition, in the permanent magnet rotor 10 shown in Fig. 7, bridges 3 of a certain thickness are formed between the longitudinal ends of the slits 2A-2C and the outside circumferential surface of the core 1 so that the radially outer portions (portions on the outside circumferential surface side) and the radially inner portions (portions on the center axis side) of the rotor core 1 with respect to the respective slits 2A-2C will not be perfectly separated by the slits 2A-2C.

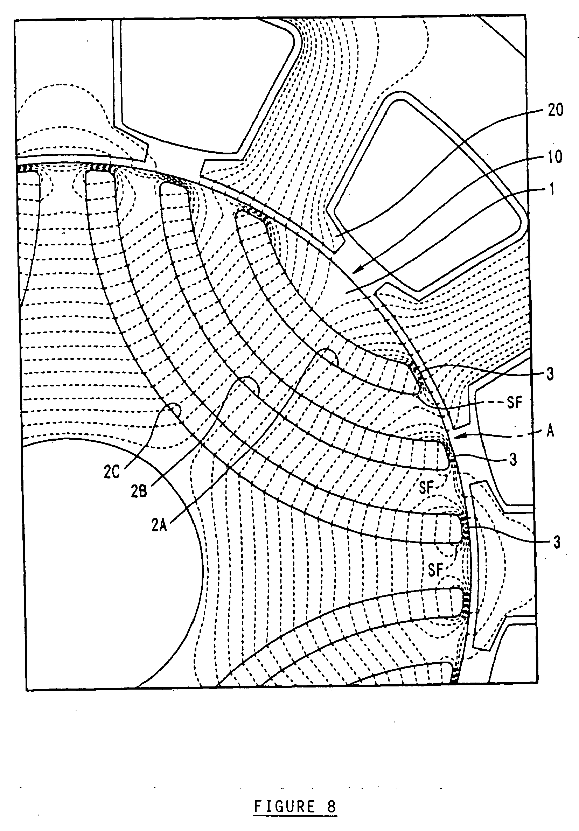

However, our earnest study has proved that in the foregoing conventional permanent magnet rotor 10, because of the bridges 3 being formed in the rotor core 1 at the outside circumferential surface side ends of the slits 2A-2C, the leakage flux is generated through the bridges 3, which prevents effective use of the permanent magnets. Fig. 8 shows the magnetic flux generated in the permanent magnet rotor 10 and the stator pole teeth 20, in dash lines, illustrating the leakage flux SF being generated through the bridges 3.

In addition, due to the effect of the leakage flux SF in the bridges 3, portions in which magnetic flux density is greater than that in the surrounding areas, are produced, as shown in Fig. 8 by symbol A, so that magnetic resistance in the magnetic paths of the q-axis magnetic flux $\Phi q$ is increased, which constitutes a factor of lowered reluctance torque.

Here, torque generated by the motor is written as:

$$T = Pn \cdot \Psi a \cdot iq + Pn(Ld-Lq)id \cdot iq \quad (1),$$

where, Ld, Lq are d- and q-axis inductances of the coil, id, iq are d- and q-axis components of the armature current, $\Psi a$ is the interlinking flux of the armature coil due to permanent magnets, and Pn is the number of the pairs of poles.

The direction of the d-axis is a direction of a line connecting the center of the magnet poles and the center of the rotor, and the direction of the q-axis is a direction of a line passing between poles and through the center of the rotor, that is, a direction at 90 degrees in electrical angle with respect to the d-axis.

The first term of the expression (1) represents a torque due to the permanent magnets, and the second term a reluctance torque.

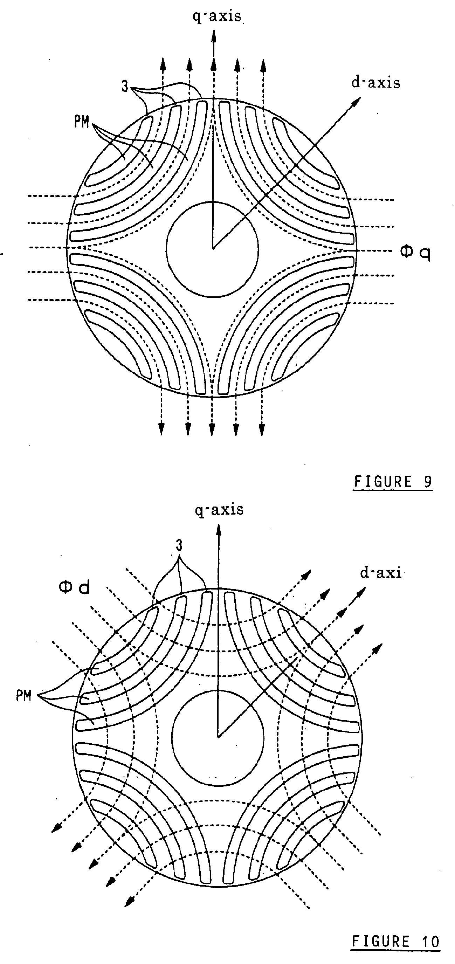

Figs. 9, 10 show the conventional permanent rotor 10 in end view, depicting the directions of the q- and d-axes. The dash lines in the figure show the directions of the q-axis magnetic flux $\Phi q$ (=Lq·iq) generated by iq and the d-axis magnetic flux $\Phi d$ (=Ld·id) generated by id, respectively in Fig. 9 and Fig. 10.

In the embedded magnet type permanent magnet rotor, permanent magnets magnetically equivalent to air gaps are disposed in the magnetic paths of the d-axis magnetic flux $\Phi d$, so that the d-axis inductance Ld is small. On the contrary, the magnetic paths of the q-axis magnetic flux $\Phi q$ pass through the rotor core 1, so that the q-axis inductance Lq is large (that is, the magnetic resistance is small). Therefore, Ld<Lq, and appropriate currents id, iq will generate the reluctance torque (Ld-Lq)id·iq.

Portions with high magnetic flux density in the bridges 3 narrow the magnetic paths of $\Phi q$ and increase the magnetic resistance of the q-axis magnetic paths, which constitutes a factor of lowering the reluctance torque.

Prior art document WO 98/40952 A1 teaches a rotor core in which a plurality of core sheets are laminated on one another on a rotor shaft and a plurality of slits and a plurality of strips are alternately arranged in a radial direction of each of the core sheets so as to convexly confront a center of each of the core sheets such that an outer peripheral rim is formed between an outer peripheral edge of each of the core sheets and each of opposite ends of each of the slits, comprising: a stress concentration portion which is provided at a portion of the outer peripheral rim and has a width larger than that of the remaining portions of the outer peripheral rim.

Prior art document FR 2 785 105 A1 teaches a motor embedded with magnets having good properties and productivity. A rotor of this motor includes a rotor core with laminated rotor core plates punched out of an electromagnetic steel plate and studded with bonded magnets of a powdered permanent magnet material and a resin in groups of slits located in the rotor core for each pole of the rotor. The outer periphery of the rotor is made in a closed configuration and the slits are provided with bridges.

Prior art document JP 62 203536 A teaches a method of making a permanent magnet rotor, whereby an angular position of the rotor core is fixed by using openings in the circumferential surface of said rotor core.

It is an objective of the present invention to provide a method of making a permanent magnet rotor and a permanent magnet rotor made by said method, being simple and providing high performance.

According to the method aspect said objective is solved by a method of making a permanent magnet rotor having the features of claim 1. A preferred embodiment is laid down in the dependent claim. According to the apparatus aspect said objective is solved by a permanent magnet rotor made by said method having the features of claim 3. Preferred embodiments are laid down in the dependent claim.

Accordingly, it is provided a permanent magnet rotor with a rotor core having permanent magnets embedded in slits respectively provided between radially outer and inner portions of said rotor core, said slits have longitudinal ends at a circumferential surface of said rotor core, and the radially outer and inner portions are connected with each other by connecting means, characterized in that said connecting means are at least partly provided at positions inwardly of the longitudinal ends of said slits.

Accordingly, said permanent magnet rotor is capable of providing an effective utilization of embedded magnets and the reluctance torque, and a preferred method of making the same.

Accordingly, it is also provided a permanent magnet rotor with a rotor core having permanent magnets embedded in slits respectively provided between radially outer and inner portions of said rotor core, the radially outer and inner portions are connected with each other by connecting means, characterized in that at least a part of said connecting means are inclined with respect to the direction of magnetization of said permanent magnets.

Accordingly, said permanent magnet rotor is capable of providing an effective utilization of embedded magnets and the reluctance torque, and a preferred method of making the same.

Accordingly, it is also provided a permanent magnet rotor with a rotor core having permanent magnets embedded in slits provided in said rotor core, characterized in that projections and/or recesses are formed on inside surfaces of said slits, and said permanent magnets are formed such that bond magnet is filled in said slits and solidified for connecting said bond magnet with the rotor core.

Accordingly, said permanent magnet rotor is capable of providing an effective utilization of embedded magnets and the reluctance torque, and a preferred method of making the same.

According to the method aspect it is provided a method of making a permanent magnet rotor with a rotor core having permanent magnets embedded therein, wherein said permanent magnets are embedded in slits of the rotor core, and an angular position of the rotor core during treatment thereof is fixed by using openings of longitudinal ends of the slits being open to the outside in the circumferential surface of said rotor core.

Such permanent magnet rotors are constituting a rotary electric device (including both types of rotating rotor and rotating coil) such as a permanent magnet electric motor and a permanent magnet generator. Such permanent magnet rotors and the method of making the same, and particularly an embedded magnet type permanent magnet rotor are capable of providing effective utilization of the reluctance torque and reduction of the leakage flux caused by the magnetic flux of the permanent magnets passing through bridges in the rotor to form a loop instead of flowing into the stator.

Preferred embodiments are laid down in the respective dependent claims.

In the following, the present invention is explained in greater detail with respect to several embodiments thereof in conjunction with the accompanying drawings, wherein:

Fig. 1 is a view showing the configuration of a first embodiment;

Fig. 2 is a view showing the distribution of the magnetic flux, illustrating the effect of the first embodiment;

Fig. 3 is a view of an example of an injection molding die for a permanent magnet rotor;

Fig. 4 is a front view of a permanent magnet rotor manufactured using the injection molding die of Fig. 3;

Fig. 5 are views showing configurations of a second embodiment;

Fig. 6 are views showing configurations of a third embodiment;

Fig. 7 is a view showing the configuration of a conventional permanent magnet rotor;

Fig. 8 is a view showing the distribution of the magnetic flux in the conventional permanent magnet rotor;

Fig. 9 is an illustration of the q-axis magnetic flux; and

Fig. 10 is an illustration of the d-axis magnetic flux.

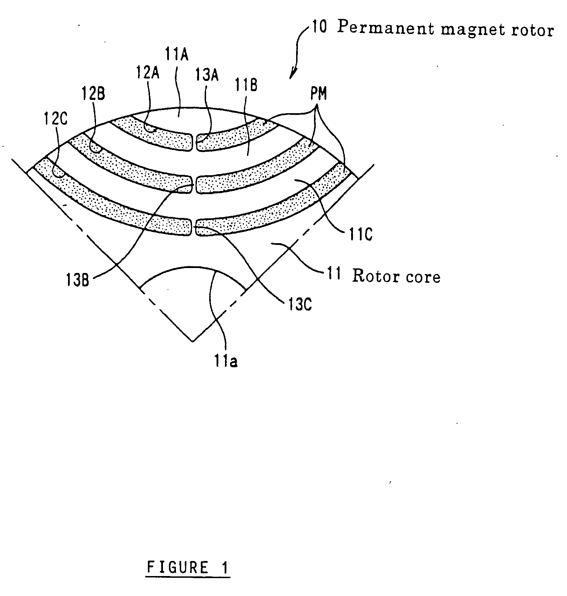

Fig. 1 is a view of a first embodiment, showing the shape of a pole of a permanent magnet rotor 10 used for an inner rotor type permanent magnet motor or the like, in end view.

That is, the permanent magnet rotor 10 has a rotor core 11 in the shape of a column made of numerous thin round blanked-out plates laminated, and the rotor core 11 is formed, at its center, with a shaft hole 11 a in which unillustrated rotary shaft is adapted to be inserted coaxially.

The rotor core 11 is also formed with slits 12A, 12B, 12C of an arc convexed toward the shaft hole 11 a, penetrating the rotor core 11 between both end faces thereof. The slits 12A-12C are arranged in layers concentrically such that the slit 12A on the radially outer side of the rotor core 11 is in the shape of an arc with a small diameter, the slit 12C on the radially inner side is in the shape of and arc with a large diameter, and the intermediate slit 12B is in the shape of an arc with a medium diameter.

Both longitudinal ends of each of the slits 12A-12C in end view, are open to the outside in the outside circumferential surface of the rotor core 11. Therefore, the radially outer portions and the radially inner portions of the rotor core 11 with respect to the respective slots 11A-12C are separated from each other. In this embodiment, narrow bridges 13A-13C for connecting the radially outer portions and the radially inner portions of the rotor core, are left at the longitudinal middle portions, in end view, of the slits 12A-12C when the plates for rotor core 11 are prepared by blanking. Specifically, the bridges 13A-13C are provided at the longitudinal middle portions of the slits 12A-12C, one for each slit, such that they extend axially at the respective same radial distance from the center of the rotor core 11, so that the bridges 13A-13C serve as a means of preventing separation of the radially outer portions and the radially inner portions of the rotor core 11 with respect to the respective slits 12A-12C. That is, the radially outer portion 11 A of the rotor core 11 with respect to the slit 12A is connected to the radially inner portion thereof through the bridge 13A, the radially outer portion 11 B of the rotor core 11 with respect to the slit 12B is connected to the radially inner portion thereof through the bridge 13B, and the radially outer portion 11C of the rotor core 11 with respect to the slit 12C is connected to the radially inner portion thereof through the bridge 13C.

In the slits 12A-12C are embedded permanent magnets PM magnetized in the direction of width of the slits 12A-12C in end view. The permanent magnets PM may be formed by bond magnet being filled in the slits 12A-12C, solidified, and then magnetized. For a small and powerful permanent magnet PM, anisotropic bond magnet may be used to form permanent magnets PM by in-magnetic field injection molding.

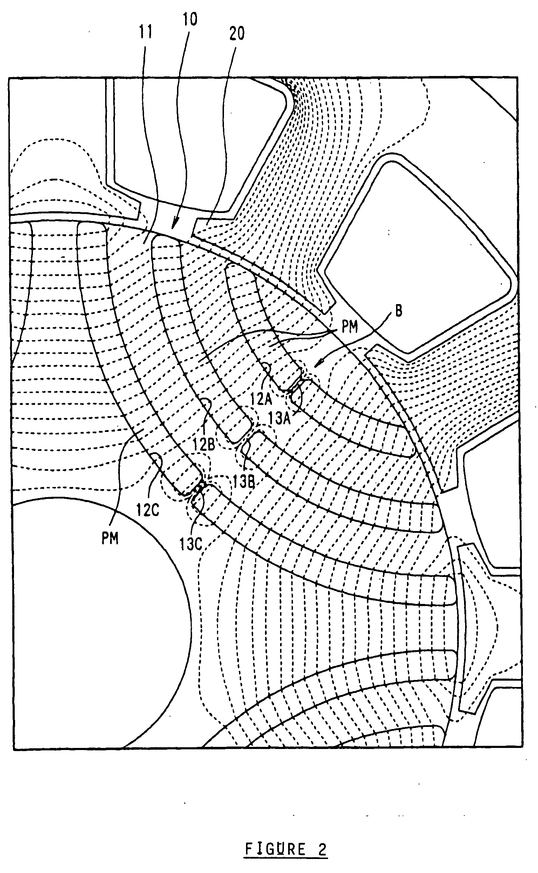

Fig. 2 is a view showing the magnetic flux generated in the permanent magnet rotor 10 and the stator core plate teeth 20 assembled in an electric motor, in dash lines, corresponding to Fig. 8 in which the prior art has been described.

That is, in the permanent magnet rotor 10 of this embodiment, the longitudinal ends of the slits 12A-12C are open to the outside in the outside circumferential surface of the rotor core 11 and the bridges 13A-13C are provided at the longitudinal middle portions of the respective slits 12A-12C, so that the leakage flux is generated from magnetic paths in either side of the bridge, as shown in Fig. 2 by symbol B, thereby reducing the region of high magnetic flux density narrowing the magnetic paths of the magnetic flux Φq between slits, with the help of the leakage flux SF. As a result, increased magnetic resistance in the magnetic paths of the q-axis magnetic flux Φq of the rotor core 11 is prevented and the reluctance torque can be utilized effectively. Such an advantage is useful particularly when the number of slits is large (that is, multilayer). In addition, the region of high magnetic flux density is not formed in the vicinity of the outside circumferential surface of the permanent magnet rotor 10, so that the flow toward the stator 10 due to the permanent magnets is not disturbed. Further, change in the distribution of the magnetic flux in the vicinity of the outside circumferential surface of the permanent magnet rotor 10 is large due to the effect of the relative positioning of the stator and the rotor, so that the iron loss can be decreased if high magnetic flux density spots are eliminated from this region,

Furthermore, in this embodiment, the slits 12A-12C are formed with the bridges 13A-13C as described above, so that the leakage flux passing through the bridges can be decreased compared with a conventional permanent magnet rotor 10 in which the bridges 3 are provided at both longitudinal ends of the slits as shown in Fig. 7, providing a more effective utilization of the permanent magnets.

While in this embodiment, the slits 12A-12C are formed with the bridges 13A-13C one for each slit, a plurality of bridges may be provided in each slot, in which case the bridge width is determined such that the sum of the widths of the bridges is equivalent of the width of the single bridge. The plurality of bridges allow the leakage flux to be dispersed, thereby effecting a further reduction in the incremental longitudinal magnetic resistance of the rotor core 11.

Moreover, in this embodiment, the bridges 13A-13C are provided in the slits 12A-12C at the longitudinal middle portions, so that the left and right side masses of the radially outer portions 11A-11C are balanced with respect to the bridges 13-13C as centers, respectively. Therefore, if the centrifugal force generated during rotation of the permanent magnet rotor 10 is exerted on the radially outer portions 11A-11C, no moment large enough to bend the bridges 13A-13C is produced (if produced, it may be very small), so that the arrangement of this embodiment in which bridges 13A-13C are provided in the slits 12A-12C one for each slit, cannot increase the possibility of damaging the rotor core 11 significantly.

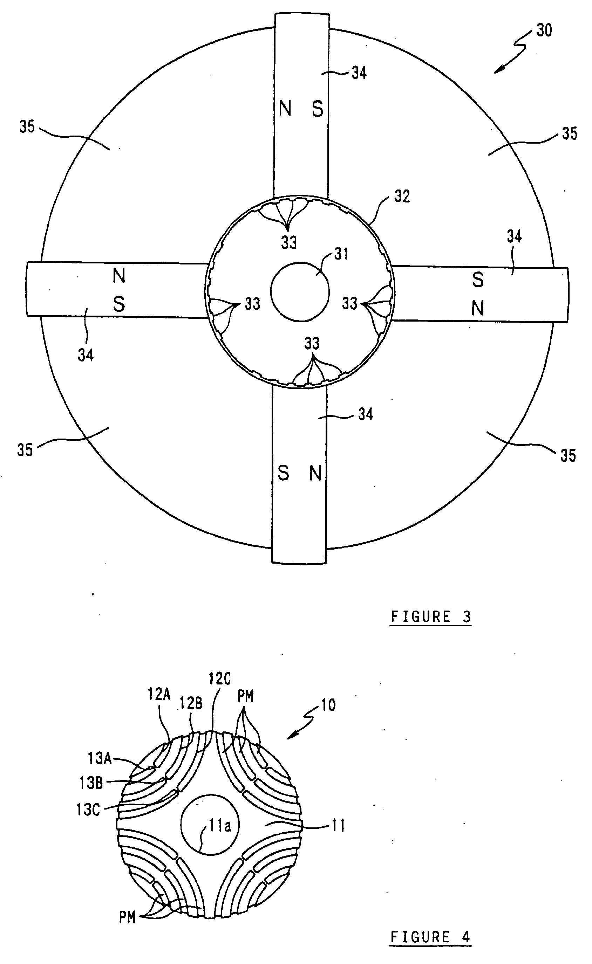

Fig. 3 is a plan view of a portion of an injection molding die 30 for use in a process for manufacturing the permanent magnet rotor 10 as shown in this embodiment. This injection molding die 30 is a cylindrical die for use in a process for forming the anisotropic bond magnet within the slits 12A-12C of the rotor core 11 by in-magnetic field injection molding, and has, at its center, a support shaft 31 adapted to be inserted into the shaft hole 11 a of the rotor core 11, and a sleeve 32 surrounding the support shaft 31 coaxially. The outside circumferential surface of the sleeve 32 is surrounded by permanent magnets 34 and yokes 35 for forming the orientating magnetic field, which are alternately disposed circumferentially at regular intervals. The sleeve 32 has, on the inside circumferential surface, a plurality of projections 33 adapted to be fitted slightly in the longitudinal ends of the slits 12A-12C of the rotor core 11. The projections 33 are actually long ridges running axially (in the direction perpendicular to the plane of Fig. 3) to be suited to the shape of the slits 12A-12C, and their locations are determined as appropriate, depending on the positional relation between the longitudinal ends of the slits 12A-12C, and the arrangement of the permanent magnets 32 for orientation.

When the bond magnet is poured into the rotor core 11 using the injection molding die 30, the support shaft 31 is inserted into the shaft hole 11a of the rotor core 11, with the longitudinal ends of the slits 12A-12C along the projections 33, to push the whole rotor core 11 into the injection molding die 30. That is, if only the longitudinal ends of the slits 12A-12C are aligned with the projections 33, the angular position of the rotor core 11 can be set in the injection molding die 30.

In addition, the rotor core tends to be rotated by the reluctance torque due to the orientating magnetic field while being inserted into the injection molding die 30, but the projections 33 are fitted slightly in the longitudinal ends of the slits 12A-12C, which prevents the rotor core 11 from being rotated by the reluctance torque in the injection molding die 30.

Further, if the projections 33 are fitted slightly in the longitudinal ends of the slits 12A-12C, the arrangement of this embodiment in which bridges 13A-13C are provided in the slits 12A-12C one for each slits, will prevent the bridges 13A-13C from being bent by injection pressure during injection molding with displacement of the radially outer portions 11A-11C.

Because of the projections 33 being provided on the inside circumferential surface of the sleeve 32 of the injection molding die 30, in the permanent magnet rotor 10 manufactured using this injection molding die, as shown in Fig. 4, regions are formed at the longitudinal ends of the slits 12A-12C in which the permanent magnets are cut off by the amount corresponding to the height of the projections, but if the height of the projections 33 is very small, that doesn't raise a problem to the performance of the permanent magnets rotor 10.

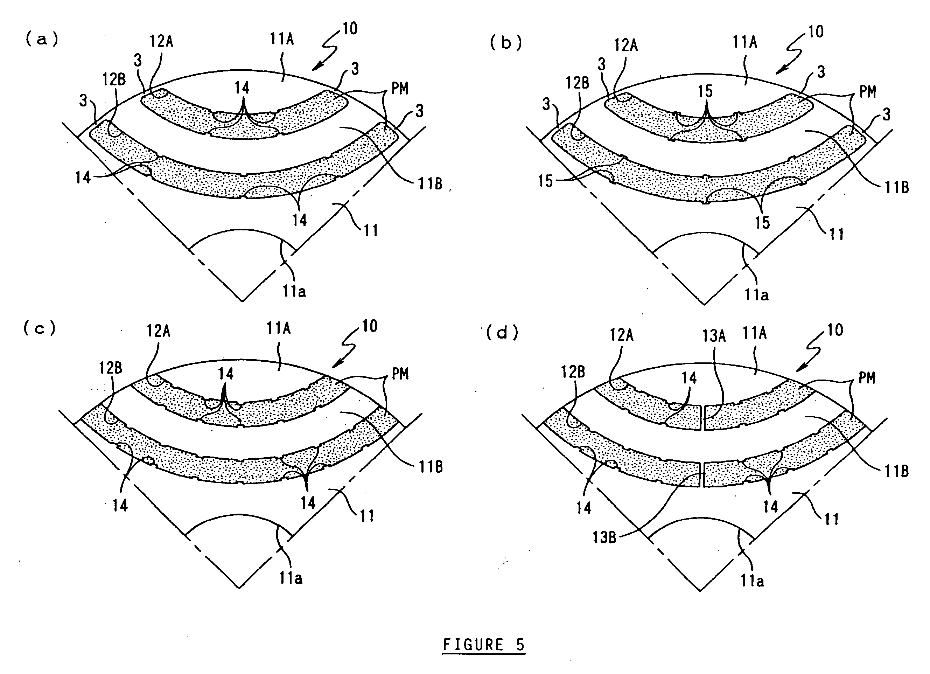

Figs. 5(a)-(d) are views showing a second embodiment. In the figure, like parts and regions as in the first embodiment are designated by like symbols, and repeated description is omitted.

That is, in the embodiment shown in Fig. 5(a) **which does not follow the entire teaching of the independent claims**, bridges 3 are formed at the longitudinal ends of the slits 12A, 12B and no bridges are formed in the middle portions thereof. That is, regarding the location of the bridges 3, the arrangement of this embodiment is the same as that of the permanent magnet rotor 10 shown in Fig. 7. Also, in the embodiment of Fig. 5(c), a plurality of projections 14 are provided on the inside surfaces of the slits 12A, 12B. The projections 14 are long ridges running axially of the rotor core 11 (in the direction perpendicular to the plane of Fig. 5), and disposed on the inside surfaces of the slits 12A, 12B at appropriate intervals. In addition, each projection 14 has an inverted trapezoidal cross-section whose width increases gradually toward the top. As a result, when the bond magnet is injection molded, projections 14 bite into the permanent magnets, so that the inside surfaces of the slits 12A, 12B and the permanent magnets PM embedded therein are connected firmly.

Therefore, the radially outer portions 11 A and the radially inner portion of the rotor core 11 with respect to the slit 12A are connected firmly not only by bridge 3 but also through the permanent magnet PM in the slits 12A, and the radially outer portions 11 B and the radially inner portion of the rotor core 11 with respect to the slit 12B are connected firmly not only by bridge 3 but also through the permanent magnet PM in the slits 12B. Thus, the rotor core 11 becomes sturdier and will withstand the large radial force due to the centrifugal force during high speed rotation. In other words, sturdy construction of the rotor core due to provision of the projections 14 allows the corresponding thinner bridges 3, which decreases the leakage flux, providing effective utilization of the permanent magnets PM.

The arrangement of the embodiment shown in Fig. 5(b) **which does not follow the entire teaching of the independent claims** is approximately the same as that of the embodiment of Fig. 5(a), except that recesses 15 are provided in place of the projections 14. The recesses 15 are long grooves running axially of the rotor core 11 (in the direction perpendicular to the plane of Fig. 5), and disposed in the inside surfaces of the slits 12A, 12B at appropriate intervals. In addition, each recess 15 has a trapezoidal cross-section whose width is larger toward the bottom. As a result, when the bond magnet is injection molded, it flows into the recesses 15, so that the inside surfaces of the slits 12A, 12B and the permanent magnets PM embedded therein are connected firmly. Thus, the same effect as in the embodiment of Fig. 5(a) can be achieved.

The arrangement of the embodiment of Fig. 5(c) is similar to that of Fig. 5(a), except that the number of the projections 14 is increased and the bridges 3 are eliminated. That is, the increased number of the projections 14 strengthens the connection of the permanent magnets PM to the inside surfaces of the slits 12A, 12B, which eliminates the bridges 3. In such an arrangement, no or little leakage flux is produced, thereby providing a more effective utilization of the permanent magnets PM.

The arrangement of the embodiment of Fig. 5(d) is approximately the same as that of Fig. 5(c), except that bridges 13A, 13B are provided in the slits 12A, 12B at the longitudinal middle portions. In such an arrangement, the reluctance torque can be utilized effectively, while the resistance to the radial forces can be improved further.

The embodiments shown of Figs. 5(c-d) are showing either recesses or projections. According to further embodiments (which are not illustrated) recesses and projections are combined within the same embodiment. With regard thereto such embodiments one slit is provided with recesses and the other slit is provided with projections. Alternatively, each slit can be provided with recesses and projections.

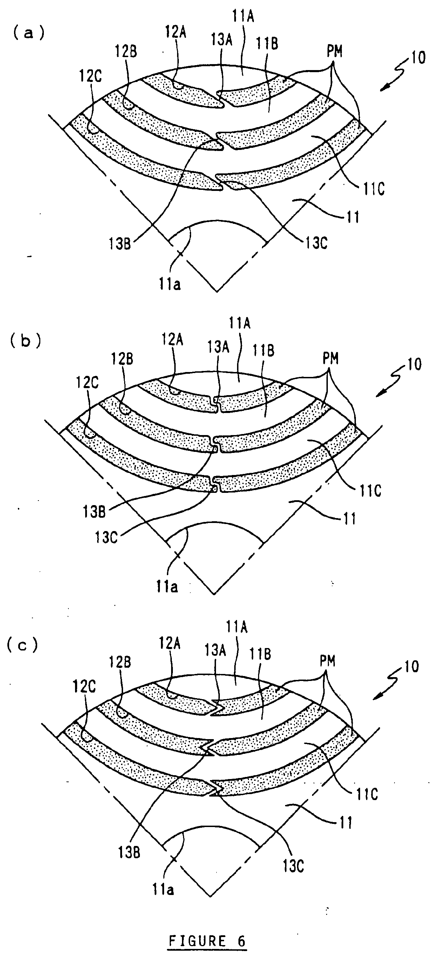

Figs. 6(a)-(d) are views showing a third embodiment. In the figure, like parts and regions as in the first embodiment are designated by like symbols, and repeated description is omitted.

That is, also in this third embodiment, the permanent magnet rotor 10 has approximately the same configuration as that of the first embodiment, except that bridges 13A-13C are inclined with respect to the direction of magnetization of the permanent magnets.

That is, in the embodiment of Fig. 6(a), the bridges 13A-13C have a shape extending obliquely to the direction of thickness of the permanent magnets PM. Specifically, in the example of Fig. 6(a), the direction of inclination is the same for all bridges. According to a further embodiment (which is not illustrated) the direction of inclination is opposite to the direction shown on Fig. 6(a). According to still a further embodiment (which is not illustrated) the direction of inclination is different between the central bridge 13B and the bridges 13A, 13C on either side thereof.

In the example of Fig. 6(b), the bridges 13A-13C are in the shape of a crank and in the example of Fig. 6(c), the bridges 13A-13C are in the shape of a letter "C" or "<". Specifically, in the example of Fig. 6(c), the direction of the letter "C" or "<" is inversed between the central bridge 13B and the bridges 13A, 13C on either side thereof. However, according to further embodiments (which are not illustrated) the orientation of the bridges are opposite to the same as shown in the figures, respectively. According to further embodiments (which are not illustrated) the orientation of the central bridge may be different or the same with regard to the bridges on either side thereof.

In the embodiments of Figs. 6 (a-c) three bridges are shown respectively. According to further embodiments (which are not illustrated) the number of bridges is different, especially more than three and the inclination or orientation of all of the bridges is the same or differs for at least one of the bridges with regard to the other bridges.

In such an arrangement, the bridges 13A-13B have sections inclined with respect to the direction of magnetization, and accordingly large lengths, so that the magnetic resistance is increased without need of decreasing the strength of the bridges 13A-13C, which decreases the leakage flux, providing an effective utilization of the permanent magnets PM.

While in the foregoing embodiment, the slits 12A-12B have the shape of an arc convexed toward the shaft hole 11 a, in further embodiments (which are not illustrated), the end shape may be, for example, of a rectangle.

According to further embodiments (which are not illustrated) the recesses and projections described with regard to Figs. 5(a-d) are combined with the bridges described with regard to Figs. 6(a-c).

The embodiments described above are teaching a rotor core 1 is formed with slits 12A, 12B, 12C, and the longitudinal ends, in end view, of the slits 12A-12C are open to the outside in the outside circumferential surface of the rotor core. In the slits 12A-12C at the longitudinal middle portions, in end view, are formed narrow bridges 13A-13C connecting the radially outer portions and the radially inner portions of the rotor core. In the slits 12A-12C are embedded permanent magnets PM magnetized in the direction of thickness, in end view, of the slits 12A-12C. Thus, the reluctance torque in an embedded magnet type permanent magnet rotor can be effectively utilized to decrease the leakage flux.

Embodiments described above are teaching a permanent magnet rotor with a rotor core having permanent magnets embedded therein, wherein the longitudinal ends of slits in which said permanent magnets are embedded, are open to the outside in the circumferential surface of said rotor core, and bridges connecting the radially outer portions and the radially inner portions of said rotor core with respect to said respective slits, are provided at positions inwardly of the longitudinal ends of said slits toward the longitudinal middle portions.

The bridges are formed, not at the longitudinal ends of the slits, but at positions inwardly of the longitudinal ends toward the middle portions of the slits. Therefore, the leakage flux is produced from either end of the bridges, so that the region of high magnetic density narrowing the magnetic paths between slits, is decreased with the help of the leakage flux. As a result, increased magnetic resistance in the magnetic paths of the q-axis magnetic flux $\Phi$q is prevented and the reluctance torque can be utilized effectively. As described above, bridges are formed at positions inwardly of the longitudinal ends of the slits toward the longitudinal middle portions, so that regions of high magnetic flux density due to the leakage flux can be decreased, an increase in the magnetic resistance in the magnetic paths of the q-axis magnetic flux $\Phi$q in the rotor core is prevented and the reluctance torque can be utilized effectively.

According to embodiments, said permanent magnets are formed such that bond magnet is filled in said slits and solidified. Thus, bond magnet is used to form the permanent magnets by injection molding, so that the permanent magnets can be embedded in the rotor core even when the shape of the slits is rather complicated. The injection molding using bond magnet may be an ordinary one in which the bond magnet is filled in the slits and solidified, or if the bond magnet is anisotropic, may be an in-magnetic field injection molding in which the bond magnet is filled in the slits and solidified in a magnetic field.

On the inside surfaces of said slits are formed projections or recesses adapted to be connected to said bond magnet when it is solidified. The projections or recesses are provided on the inside surfaces of the slits to strengthen the connection of the solidified bond magnets to the inside surfaces of the slits. Therefore, connection between the radially outer portions and the radially inner portions of the rotor core with respect to the respective slits is strengthened through the solidified bond magnets, thereby providing a sturdier rotor core.

According to embodiments, said bridges are inclined with respect to the direction of magnetization of said permanent magnets, so that the magnetic resistance in the bridges is increased without need of reducing the strength of the bridges, which decreases the leakage flux, improving availability of the magnets.

According to embodiments the permanent magnet rotor comprises a rotor core having permanent magnets embedded therein, wherein said permanent magnets are formed such that bond magnet is filled in said slits and solidified, and on the inside surfaces of said slits are formed projections or recesses adapted to be connected to said bond magnet when it is solidified. The connection between the radially outer portions and the radially inner portions of the rotor core with respect to the respective slits, is strengthened through the bond magnet, thereby providing a sturdier rotor core.

According to embodiments, the permanent magnet rotor comprises a rotor core having permanent magnets embedded therein, wherein bridges connecting the radially outer portions and the radially inner portions of said rotor core with respect to said respective slits in which said permanent magnets are embedded, are inclined with respect to the direction of magnetization of said permanent magnets. The magnetic resistance in the bridges is increased without need of reducing the strength of the bridges, which decreases the leakage flux, improving availability of the magnets.

The projections or recesses are provided on the inside surfaces of the slits to strengthen the connection of the solidified bond magnets to the inside surfaces of the slits, so that connection between the radially outer portions and the radially inner portions of the rotor core with respect to the respective slits, are strengthened through solidified bond magnets, providing a sturdier rotor core capable of withstanding the large radial force due to the centrifugal force during high speed rotation.

The bridges are inclined with respect to the direction of magnetization of the permanent magnets, so that the magnetic resistance in the bridges is increased without need of reducing the strength of the bridges, which decreases the leakage flux, improving availability of the magnets.

Furthermore, the explanation of the embodiments also teaches a method of making a permanent magnet rotor with a rotor core having permanent magnets embedded therein, wherein the longitudinal ends of slits in which said permanent magnets are embedded, are open to the outside in the circumferential surface of said rotor core, and processes are provided in which treatment of said rotor core is performed with the rotor core set at a fixed angular position using said openings of said slits. Treatment of the rotor core is performed with the rotor core set at a fixed angular position using the openings of the slits in the circumferential surface of the rotor core, so that an additional device for setting the angular position of the rotor core is not needed. The treatment under the condition of the fixed angular position of the rotor core, includes, for example, filling of bond magnet into the slits, magnetization of the filled bond magnet, etc. The treatment of the rotor core is performed with the rotor core set at a fixed angular position using the openings of the slits in the circumferential surface of the rotor core, so that an additional device for setting the angular position of the rotor core is not needed.

The embodiments mentioned above are teaching a permanent magnet rotor with a rotor core 11 having permanent magnets PM embedded in slits 12A-12C respectively provided between radially outer and inner portions 11A-11C of said rotor core 11. Said slits 12A-12C have longitudinal ends at a circumferential surface of said rotor core 11. The radially outer and inner portions 11A-11C are connected with each other by connecting means 13A-13C,14,15. Said connecting means 13A-13C,14,15 are at least partly provided at positions inwardly of the longitudinal ends of said slits 12A-12C.

Said connecting means comprises bridges 13A-13C connecting the radially outer portions and the radially inner portions of said rotor core 11 with respect to said respective slits 12A-12C. Said bridges 13A-13C are provided at positions inwardly of the longitudinal ends of said slits 12A-12C toward the longitudinal middle portions. Preferably, said bridges 13A-13C are inclined with respect to a direction of magnetization of said permanent magnets PM.

The embodiments mentioned above are teaching a permanent magnet rotor with a rotor core 11 having permanent magnets PM embedded in slits 12A-12C respectively provided between radially outer and inner portions 11A-11C of said rotor core 11. The radially outer and inner portions 11A-11C are connected with each other by connecting means 13A-13C,14,15. At least a part of said connecting means 13A-13C are inclined with respect to the direction of magnetization of said permanent magnets. Said connecting means comprises bridges

13A-13C connecting the radially outer and inner portions 11A-11C of the rotor core 11.

According to embodiments mentioned above, said permanent magnets are formed such that bond magnet is filled in said slits and solidified. Said connecting means comprises projections and/or recesses 14,15 on the inside surfaces of said slits adapted to be connected to said bond magnet when it is solidified.

The embodiments mentioned above are teaching a permanent magnet rotor with a rotor core having permanent magnets PM embedded in slits 12A-12C provided in said rotor core 11, wherein projections and/or recesses 14,15 are formed on inside surfaces of said slits 12A-12C, and said permanent magnets PM are formed such that bond magnet is filled in said slits 12A-12C and solidified for connecting said bond magnet with the rotor core 11.

According to preferred embodiments, the longitudinal ends of slits 12A-12C in which said permanent magnets PM are embedded, are open to the outside in the circumferential surface of said rotor core 11.

The embodiments mentioned above are teaching a method of making a permanent magnet rotor with a rotor core 11 having permanent magnets PM embedded therein. Said permanent magnets PM are embedded in slits 12A-12C of the rotor core (11), and an angular position of the rotor core 11 during treatment thereof is fixed by using openings of longitudinal ends of the slits 12A-12C being open to the outside in the circumferential surface of said rotor core 11. Engagement means, especially projections 33, are engaging said openings of the slits 12A-12C for fixing the angular position of the rotor core 11 during treatment thereof.

## Claims

1. A method of making a permanent magnet rotor with a rotor core (11) having permanent magnets (PM) embedded therein, wherein said permanent magnets (PM) are embedded in slits (12A-12C) of the rotor core (11), **characterized in that** an angular position of the rotor core (11) during treatment thereof is fixed by using openings of longitudinal ends of the slits (12A-12C) being open to the outside in the circumferential surface of said rotor core (11).

2. A method of making a permanent magnet rotor according to claim 1, wherein engagement means, especially projections (33), are engaging said openings of the slits (12A-12C) for fixing the angular position of the rotor core (11) during treatment thereof.

3. A permanent magnet rotor, made by the method according to claim 1 or 2, wherein the permanent magnets (PM) are provided between radially outer and inner portions (11A-11C) of said rotor core (11), said slits (12A-12C) have longitudinal ends being open at a circumferential surface of said rotor core (11), the radially outer and inner portions (11A-11C) are connected with each other by connecting means (13A-13C,14,15), and said connecting means (13A-13C,14,15) are at least partly provided at positions inwardly of the longitudinal ends of said slits (12A-12C).

4. A permanent magnet rotor according to claim 3, wherein said connecting means comprises bridges (13A-13C) connecting the radially outer portions and the radially inner portions of said rotor core (11) with respect to said respective slits (12A-12C), wherein said bridges (13A-13C) are provided at positions inwardly of the longitudinal ends of said slits (12A-12C) toward the longitudinal middle portions.

5. A permanent magnet rotor according to claim 4,wherein said bridges (13A-13C) are inclined with respect to a direction of magnetization of said permanent magnets (PM).

6. A permanent magnet rotor according to at least one of the claims 3 to 5, wherein said connecting means comprises projections and/or recesses (14,15) on the inside surfaces of said slits (12A,12B) adapted to be connected to a bond magnet when it is solidified.

## Patentansprüche

1. Ein Verfahren zum Herstellen eines Permanent-Magnet-Rotors mit einem Rotor-Kern (11), der darin Permanent-Magnete (PM) eingebettet hat, wobei diese Permanent-Magnete (PM) in Schlitze (12A-12C) des Rotor-Kerns (11) eingebettet sind, **dadurch gekennzeichnet, dass** eine Winkel-Position des Rotor-Kerns (11), während der Bearbeitung desselben, durch Verwendung von Öffnungen von Längsenden der Schlitze (12A-12C), welche zu der Außenseite in der Umfangsfläche von diesem Rotor-Kern (11) offen sind, fixiert ist.

2. Ein Verfahren zum Herstellen eines Permanent-Magnet-Rotors gemäß Anspruch 1, wobei Eingriffs-Einrichtungen, insbesondere Vorsprünge (33), in diese Öffnungen der Schlitze (12A-12C) eingreifen, um die Winkel-Position des Rotor-Kerns (11) während der Bearbeitung desselben zu fixieren.

3. Ein Permanent-Magnet-Rotor, hergestellt durch das Verfahren gemäß Anspruch 1 oder 2, wobei die Permanent-Magnete (PM) zwischen radial äußeren und inneren Abschnitten (11A-11C) von diesem Rotor-Kern (11) vorgesehen sind, diese Schlitze (12A-12C) haben Längs-Enden, die an einer Umfangsfläche von diesem Rotor-Kern (11) offen sind, die radial äußeren und inneren Abschnitte (11A-11C) sind miteinander durch Verbindungseinrichtungen (13A-13C, 14, 15) verbunden, und diese Verbindungseinrichtungen (13A-13C, 14, 15) sind zumindest teilweise an Positionen innerhalb von den Längs-Enden von diesen Schlitzen (12A-12C) vorgesehen.

**4.** Ein Permanent-Magnet-Rotor gemäß Anspruch 3, wobei diese Verbindungseinrichtungen Brücken (13A-13C) umfassen, welche die radial äußeren Abschnitte und die radial inneren Abschnitte von diesem Rotor-Kern (11), mit Bezug auf die jeweiligen Schlitze (12A-12C), verbinden, wobei diese Brücken (13A-13C) an Positionen innerhalb von den Längs-Enden von diesen Schlitzen (12A-12C) zu den Längs-Mittel-Abschnitten vorgesehen sind.

**5.** Ein Permanent-Magnet-Rotor gemäß Anspruch 4, wobei diese Brücken (13A-13C) mit Bezug auf eine Richtung der Magnetisierung von diesen Permanent-Magneten (PM) geneigt sind.

**6.** Ein Permanent-Magnet-Rotor gemäß zumindest einem der Ansprüche 3 bis 5, wobei diese Verbindungseinrichtungen Vorsprünge und/oder Ausnehmungen (14, 15) an den Innen-Seiten-Flächen von diesen Schlitzen (12A, 12B) umfassen, angepasst, um mit einem Verbund-Magnet verbunden zu werden, wenn dieser ausgehärtet ist.

**Revendications**

**1.** Procédé de fabrication d'un rotor à aimant permanent avec un noyau de rotor (11) comportant des aimants permanents (PM) qui y sont intégrés, dans lequel lesdits aimants permanents (PM) sont intégrés dans des fentes (12A-12C) du noyau de rotor (11), **caractérisé en ce qu'**une position angulaire du noyau de rotor (11) durant son traitement est fixée en utilisant des ouvertures d'extrémités longitudinales des fentes (12A-12C) qui sont ouvertes vers l'extérieur dans la surface circonférentielle dudit noyau de rotor (11).

**2.** Procédé de fabrication d'un rotor à aimant permanent selon la revendication 1, dans lequel des moyens d'engagement, en particulier des projections (33), s'engagent avec lesdites ouvertures des fentes (12A-12C) pour fixer la position angulaire du noyau de rotor (11) durant son traitement.

**3.** Rotor à aimant permanent fabriqué à l'aide du procédé selon la revendication 1 ou 2, dans lequel les aimants permanents (PM) sont pourvus entre des portions radialement externes et internes (11A-11C) dudit noyau de rotor (11), lesdites fentes (12A-12C) ont des extrémités longitudinales qui sont ouvertes sur une surface circonférentielle dudit noyau de rotor (11), les portions radialement externes et internes (11A-11C) sont connectées entre elles par un moyen de connexion (13A-13C, 14, 15), et ledit moyen de connexion (13A-13C, 14, 15) est au moins partiellement pourvu à des positions vers l'intérieur des extrémités longitudinales desdites fentes (12A-12C).

**4.** Rotor à aimant permanent selon la revendication 3, dans lequel ledit moyen de connexion comprend des ponts (13A-13C) qui connectent les portions radialement externes et les portions radialement internes dudit noyau de rotor (11) par rapport auxdites fentes respectives (12A-12C), dans lequel lesdits ponts (13A-13C) sont pourvus à des positions vers l'intérieur des extrémités longitudinales desdites fentes (12A-12C) vers les portions moyennes longitudinales.

**5.** Rotor à aimant permanent selon la revendication 4, dans lequel lesdits ponts (13A-13C) sont inclinés par rapport à une direction de magnétisation desdits aimants permanents (PM).

**6.** Rotor à aimant permanent selon au moins l'une des revendications 3 à 5, dans lequel ledit moyen de connexion comprend des projections et/ou des renfoncements (14, 15) sur les surfaces internes desdites fentes (12A, 12B) adaptés pour être connectés à un aimant de liaison quand il est solidifié.

10 Permanent magnet rotor

FIGURE 1

FIGURE 2

FIGURE 3

FIGURE 4

FIGURE 5

EP 1 164 683 B1

FIGURE 6

FIGURE 7

FIGURE 8

16

q·axis

3

PM

d·axis

Φq

FIGURE 9

q·axis

3

Φd

PM

d·axi

FIGURE 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11262205 A
- JP HEI11206075 A
- WO 9840952 A1
- FR 2785105 A1
- JP 62203536 A